(19) Europäisches Patentamt
European Patent Office
Office européen des brevets

(11) EP 1 160 249 B1

(12) # EUROPÄISCHE PATENTSCHRIFT

(45) Veröffentlichungstag und Bekanntmachung des Hinweises auf die Patenterteilung:
**31.10.2007 Patentblatt 2007/44**

(51) Int Cl.:
*C07F 5/04* (2006.01) *C07B 61/00* (2006.01)
*G21F 9/28* (2006.01) *H01M 10/00* (2006.01)
*C10M 105/00* (2006.01)

(21) Anmeldenummer: **01113237.0**

(22) Anmeldetag: **30.05.2001**

(54) **Ionische Flüssigkeiten**

Ionic liquids

Liquides ioniques

(84) Benannte Vertragsstaaten:
**AT BE CH CY DE DK ES FI FR GB GR IE IT LI LU MC NL PT SE TR**

(30) Priorität: **30.05.2000 DE 10026565**

(43) Veröffentlichungstag der Anmeldung:
**05.12.2001 Patentblatt 2001/49**

(73) Patentinhaber: **Merck Patent GmbH
64293 Darmstadt (DE)**

(72) Erfinder:
- **Hilarius, Volker, Dr.
64823 Gross-Umstadt (DE)**
- **Heider, Udo, Dr.
64560 Reidstadt (DE)**
- **Schmidt, Michael, Dr.
64342 Seeheim-Jugenheim (DE)**

(56) Entgegenhaltungen:
**WO-A-98/07729 US-A- 5 827 602**

- **DATABASE CA [Online] CHEMICAL ABSTRACTS SERVICE, COLUMBUS, OHIO, US; KUHN, N. ET AL: "Crystal structure of 1,3-diisopropyl-4,5-dimethylimidazolium tetramethoxyborate, [C11H21N2][B(OCH3)4]" retrieved from STN Database accession no. 135:39092 CA XP002248587 & ZEITSCHRIFT FUER KRISTALLOGRAPHIE - NEW CRYSTAL STRUCTURES (2001), 216(2) 315-317 , 2001,**
- **DATABASE CA [Online] CHEMICAL ABSTRACTS SERVICE, COLUMBUS, OHIO, US; MIYAKE, SUMIYA ET AL: "Storage-stable epoxy resin compositions containing ammonium borates as latent crosslinking accelerators" retrieved from STN Database accession no. 131:103041 CA XP002248588 & JP 11 171981 A (SUMITOMO BAKELITE CO., LTD., JAPAN) 29. Juni 1999 (1999-06-29)**
- **DATABASE CA [Online] CHEMICAL ABSTRACTS SERVICE, COLUMBUS, OHIO, US; URAMOTO, MASAHIDE ET AL: "Electrolytic capacitor driving electrolytic solution containing borodisalicylate" retrieved from STN Database accession no. 130: 245332 CA XP002248589 & JP 11 067604 A (TOYAMA YAKUHIN KOGYO K. K., JAPAN) 9. März 1999 (1999-03-09)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 160 249 B1

## Beschreibung

Die Erfindung betrifft ionische Flüssigkeiten zur Anwendung in elektrochemischen Zellen und organischen Synthesen.

Lösungsmittelfreie ionische Flüssigkeiten oder bei "Raumtemperatur geschmolzene Salze"wurden erstmals in US 2446331 beschrieben. Das Problem dieser starken Lewis-Säuren ist die Bildung giftiger Gase bei Kontakt mit Luftfeuchtigkeit.

Lange Zeit wurden Verbindungen um $AlCl_3$ und 1-Ethyl-3-methylimidazolium (EMI) chlorid untersucht. Wilkes und Zaworotko stellten 1992 in J. Chem. Soc., Chem. Commun., S. 965 neue Lösungsmittelfreie ionische Flüssigkeiten, EMI $BF_4$ und EMI $O_2CCH_3$, vor. Allerdings sind diese Verbindungen für den Einsatz als Elektrolyt in elektrochemischen Zellen ungeeignet, da die $BF_4^-$ und $CH_3C_2$- Anionen schon bei relativ niedrigen Potentialen oxidiert werden.

In WO 98/07729 wird eine neue Klasse von Leitsalzen, die Lithium-Boratkomplexe, beschrieben. In Zyklisierungsversuchen haben diese Verbindungen besonders gute Ergebnisse gezeigt und sich als besonders stabil erwiesen. Die Boratsalze liegen im festen Zustand vor und weisen damit eine relativ geringe Leitfähigkeit auf.

In US 5827602 wird der Einsatz ionische Flüssigkeiten aus der Gruppe der Pyridinium-, Pyridazinium-, Pyrimidinium-, Pyrazinium-, Imidazolium-, Pyrazolium-, Thiazolium-, Oxazolium- und Triazoliumsalze in elektrochemischen Zellen beschrieben. Diese ionischen Flüssigkeiten sind durch gute Leitfähigkeiten für diese Anwendung besonders geeignet. Der entscheidende Nachteil besteht in der teuren Synthese der Rohstoffe, insbesondere der Anionen.

JP 11-171981 beschreibt eine Harz-Zusammensetzung, die neben weiteren Bestandteilen Onium-Borate enthält, wobei die Borate aromatische, heterocyclische oder aliphatische Substituenten aufweisen.

In JP 11-067604 werden Elektrolyte mit Ammoniumdisalicylatboraten beschrieben.

Gegenstand der vorliegenden Erfindung ist es deshalb, ionische Flüssigkeiten zur Verfügung zu stellen, die einen großen Flüssigkeitsbereich, eine hohe thermische Stabilität und geringe Korrosivität sowie kostengünstiger synthetisierte Anionen aufweisen.

Die erfindungsgemäße Aufgabe wird gelöst durch ionische Flüssigkeiten der allgemeinen Formel

$$K^+A^- \qquad (I)$$

worin bedeuten:

$K^+$ ein Kation ausgewählt aus der Gruppe

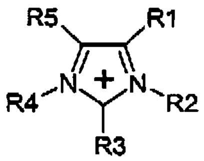

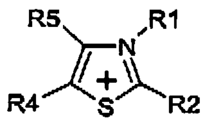

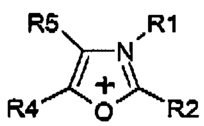

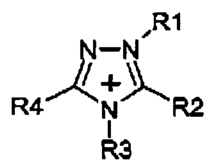

wobei $R^1$ bis $R^5$ gleich oder verschieden, gegebenenfalls durch eine Einfach- oder Doppelbindung direkt miteinander verbunden sind und jeweils einzeln oder gemeinsam folgende Bedeutung haben:

- H,
- Halogen,
- Alkylrest ($C_1$ bis $C_8$) der teilweise oder vollständig durch F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit $1<n<6$ und $0<x\leq13$ substituiert sein kann

und

$A^-$ ein Anion ausgewählt aus der Gruppe

$$[B(OR^1)_n(OR^2)_m(OR^3)_o(OR^4)_p]^-$$

mit $0 \leq n, m, o, p \leq 4$ und

$$m+n+o+p=4$$

wobei $R^1$ bis $R^4$ verschieden oder paarweise gleich sind, durch eine Einfach- oder Doppelbildung direkt miteinander verbunden sind, jeweils einzeln oder gemeinsam
die Bedeutung eines aromatischen Rings aus der Gruppe Anthracenyl oder Phenanthrenyl, der unsubstituiert oder ein- oder mehrfach durch $C_nF_{(2n+1-x)}H_x$mit $1<n<6$ und $0<x\leq 13$ oder F, Cl, Br substituiert sein kann, besitzen,
die Bedeutung eines aromatischen heterocyclischen Rings aus der Gruppe Pyridyl, Pyrazyl oder Pyrimidyl, der unsubstituiert oder ein- oder mehrfach durch $C_nF_{(2n+1-x)}H_x$ mit $1 <n<6$ und $0<x\leq 13$ oder Halogen oder Halogen (F, Cl, Br) substituiert sein kann, besitzen,
beziehungsweise $OR^1$ bis $OR^4$
einzeln oder gemeinsam die Bedeutung eines aliphatischen Carboxyl-, Dicarboxyl-, Oxysulfonyl- oder Oxycarboxylrests, der teilweise oder vollständig durch F, Cl, , $N(C_nF_{(2n+1-x)}Hx)_2$, $C)(C_nF(_{2n+1-x})H_x)$, $SO_2(C_nF(_{2n+1-x})H_x)$, $C_nF_{(2n+1-x)}H_x$ mit $1 <n<6$ und $0<x\leq 13$ substituiert sein kann, besitzen.

Diese ionischen Flüssigkeiten sind als Lösungsmittel in der organischen Synthese, aber auch für den Einsatz in elektrochemischen Zellen geeignet. Zudem sind die ionischen Flüssigkeiten für den Einsatz in der Katalyse von chemischen Reaktionen geeignet. Außerdem können sie als inertes Lösungsmittel für hochreaktive Chemikalien verwendet werden. Ein weiteres Gebiet ist die Verwendung als hydraulische Flüssigkeit.

Es wurde gefunden, daß die erfindungsgemäßen Verbindungen hydrophob sind. Durch die wasserfreie Synthese wird zudem der unerwünschte Eintrag von Wasser in das System minimiert.

Überraschend wurde gefunden, daß die ionischen Flüssigkeiten den Aluminium-Stromkollektor, der üblicherweise in elektrochemischen Zellen verwendet wird, nicht korrodieren, sondern sogar passivieren. Damit kann die Zyklenstabilität erhöht werden. Außerdem konnte eine verbesserte thermische Stabilität des Systems durch den Einsatz ionischer Flüssigkeiten festgestellt werden.

Es wurde gefunden, daß durch den Zusatz von Lösungsmitteln mit niedriger Viskosität die Leitfähigkeit verbessert werden kann. Eine niedrige Viskosität mit hoher Leitfähigkeit ist für den Einsatz in elektrochemischen Zellen Voraussetzung. Die erfindungsgemäßen Verbindungen weisen einen großen Flüssigkeitsbereich auf, so daß sie für diese Anwendungen besonders geeignet sind.

Für die Anwendung in Doppelschichtkondensatoren ist eine hohe Leitfähigkeit Voraussetzung. Die erfindungsgemäßen Verbindungen erfüllen dieses Kriterium. Die erfindungsgemäßen Verbindungen können allein oder in Mischungen mit anderen Lösungsmitteln oder Leitsalzen in elektrochemischen Zellen, zur Katalyse von chemischen Reaktionen oder auch als hydraulische Flüssigkeiten eingesetzt werden. Geeignet sind Lösungsmittel ausgewählt aus der Gruppe organischer Carbonate (z.B. Ethylencarbonat, Propylencarbonat und deren Derivate, Butylencarbonat, Dimethylcarbonat, Diethylcarbonat, Methylethylcarbonat usw.),organischer Carbonsäureester (z.B. γ-Butyrolacton, Methylformiat, Methylacetat, Ethylacetat, Ethylpropionat, Methylpropionat, Methylbutyrat, Ethylbutyrat usw.), organischer Carbonsäureamide (z.B. Dimethylformamid, Methylformamid, Formamid usw.), organischer Ether (z.B. 1,2-Dimethoxyethan, Tetrahydrofuran, 2-Methyltetrahydrofuran, Tetrahydrofuranderivate, 1,3-Dioxolan, Dioxan, Dioxolanderivate usw.) oder andere aprotische Lösungsmittel (z.B. Acetonitril, Sulfolan, Dimethylsulfoxid, Nitromethan, Phosphorsäuretriester, Trimethoxymethan, 3-Methyl-2-oxazolidinon usw.). Lösungsmittelgemische, wie z.B. Ethylencarbonat/Dimethylcarbonat (EC/DMC) können ebenfalls verwendet werden.

Die erfindungsgemäßen neuen Salze, wie EMIBOX, EMIBLAC und ähnliche, gelöst in organischen Lösungsmitteln, zeigen als Elektrolyte im Vergleich mit bereits bekannten folgende Hauptvorteile:

Selbst in Lösungsmittel niedriger Dielektrizitätszahl können sehr hohe Löslichkeiten erreicht werden. Diese Tatsache erweitert den Einsatz derartiger Salze und die in Frage kommenden Lösungsmittel beträchtlich.

Die thermisch stabilen und wenig hydrolyseempfindlichen molekularen Anionen entwickeln weder HF noch starke Lewissäuren, wie $BF_3$ oder $PF_5$, was sich auf die Korrosion des Stromableiters und die Langzeitstabilität der Lösung günstig auswirkt.

Bereits ohne Optimierung der Lösungsmittel können hohe Leitfähigkeiten erreicht werden.

Die Kondensatoren können mit hohen Spannungen bis zu 2,7V aufgeladen werden, ohne dass sich die Dimensionen des Kondensators durch Gasen ändern.

Die erfindungsgemäßen Verbindungen können in Elektrolyten mit herkömmlichen Leitsalzen verwendet werden. Geeignet sind z.B. Elektrolyte mit Leitsalzen ausgewählt aus der Gruppe $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen. Die Elektrolyte können auch organische Isocyanate (DE 199 44 603) zur Herabsetzung des Wassergehaltes enthalten.

Auch Lithiumkomplexsalze der Formel

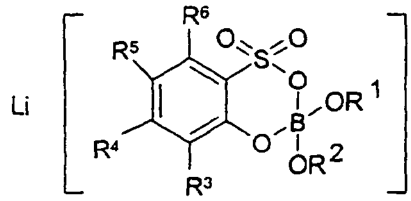

wobei

$R^1$ und $R^2$ gleich oder verschieden sind, gegebenenfalls durch eine Einfach- oder Doppelbildung direkt miteinander verbunden sind, jeweils einzeln oder gemeinsam die Bedeutung eines aromatischen Rings aus der Gruppe Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann, haben,
oder jeweils einzeln oder gemeinsam die Bedeutung eines aromatischen heterocyclischen Rings aus der Gruppe Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,
oder jeweils einzeln oder gemeinsam die Bedeutung eines aromatischen Rings aus der Gruppe Hydroxylbenzoecarboxyl, Hydroxylnaphthalincarboxyl, Hydroxylbenzoesulfonyl und Hydroxylnaphthalinsulfonyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,

$R^3$-$R^6$ können jeweils einzeln oder paarweise, gegebenenfalls durch eine Einfach- oder Doppelbindung direkt miteinander verbunden, folgende Bedeutung haben:

1. Alkyl ($C_1$ bis $C_6$),Alkyloxy ($C_1$ bis $C_6$) oder Halogen (F, Cl, Br)

2. ein aromatischer Ring aus den Gruppen

Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann,
Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann,
die über folgendes Verfahren (DE 199 32 317) dargestellt werden

a) 3-, 4-, 5-, 6-substituiertes Phenol in einem geeigneten Lösungsmittel mit Chlorsulfonsäure versetzt wird,

b) das Zwischenprodukt aus a) mit Chlortrimethylsilan umgesetzt, filtriert und fraktioniert destilliert wird,

c) das Zwischenprodukt aus b) mit Lithiumtetramethanolat-borat(1-), in einem geeigneten Lösungsmittel umgesetzt und daraus das Endprodukt isoliert wird, können im Elektrolyten enthalten sein.

Ebenso können die Elektrolyte Verbindungen der folgenden Formel (DE 199 41 566)

$$[([R^1(CR^2R^3)_k]_lA_x)_yKt]^{+}\ ^{-}N(CF_3)_2$$

wobei

Kt= N, P, As, Sb, S, Se

A= N, P, P(O), O, S, S(O), $SO_2$, As, As(O), Sb, Sb(O)

$R^1$, $R^2$ und $R^3$ gleich oder verschieden

H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,
A kann in verschiedenen Stellungen in $R^1$, $R^2$ und/oder $R^3$ eingeschlossen sein,
Kt kann in cyclischen oder heterocyclischen Ring eingeschlossen sein,
die an Kt gebundenen Gruppen können gleich oder verschieden sein
mit

n= 1-18

m= 3-7

k= 0, 1-6

l= 1 oder 2 im Fall von x=1 und 1 im Fall x=0

x= 0,1

y= 1-4

bedeuten, enthalten. Das Verfahren zur Herstellung dieser Verbindungen ist dadurch gekennzeichnet, daß ein Alkalisalz der allgemeinen Formel

$$D^{+}\ {}^{-}N(CF_3)_2$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^{+}\ {}^{-}E$$

wobei

Kt, A, $R^1$, $R^2$, $R^3$, k, l, x und y die oben angegebene Bedeutung haben und

$^-E$ $F^-$, $Cl^-$, $Br^-$, $I^-$, $BF_4^-$, $ClO_4^-$, $AsF_6^-$, $SbF_6^-$ oder $PF_6^-$

bedeutet, umgesetzt wird.

Aber auch Elektrolyte enthaltend Verbindungen der allgemeinen Formel (DE 199 53 638)

$$X\text{-}(CYZ)_m\text{-}SO_2N(CR^1R^2R^3)_2$$

mit

X H, F, Cl, $C_nF_{2n+1}$, $C_nF_{2n-1}$, $(SO_2)_kN(CR^1R^2R^3)_2$

Y H, F, Cl

Z H, F, Cl

$R^1$, $R^2$, $R^3$ H und/oder Alkyl, Fluoralkyl, Cycloalkyl

m 0-9 und falls X=H, m≠0

n 1-9

k 0, falls m=0 und k=1, falls m=1-9,

hergestellt durch die Umsetzung von teil- oder perfluorierten Alkysulfonylfluoriden mit Dimethylamin in organischen Lösungsmitteln sowie Komplexsalze der allgemeinen Formel (DE 199 51 804)

$$M^{x+}[EZ]^{y-}_{x/y}$$

worin bedeuten:

x,y 1,2,3,4,5,6

$M^{x+}$ ein Metallion

E eine Lewis-Säure, ausgewählt aus der Gruppe

$BR^1R^2R^3$, $AlR^1R^2R^3$, $PR^1R^2R^3R^4R^5$, $AsR^1R^2R^3R^4R^5$, $VR^1R^2R^3R^4R^5$,
$R^1$ bis $R^5$ gleich oder verschieden, gegebenenfalls durch eine Einfach- oder Doppelbildung direkt miteinander verbunden sind, jeweils einzeln oder gemeinsam die Bedeutung
eines Halogens (F, Cl, Br),
eines Alkyl- oder Alkoxyrestes ($C_1$ bis $C_8$) der teilweise oder vollständig durch F, Cl, Br substituiert sein kann,
eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann
eines, gegebenenfalls über Sauerstoff gebundenen aromatischen heterocyclischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann,
haben können und

Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$, $OCOR^6$,

wobei
$R^6$ bis $R^8$ gleich oder verschieden sind, gegebenenfalls durch eine Einfach- oder Doppelbindung direkt miteinander verbunden sind, jeweils einzeln oder gemeinsam die Bedeutung
eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.
Auch Boratsalze (DE 199 59 722) der allgemeinen Formel

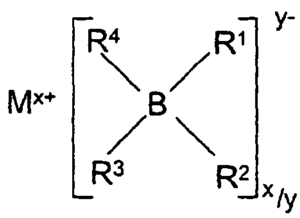

worin bedeuten:

M ein Metallion oder Tetraalkylammoniumion

x,y 1, 2, 3, 4, 5 oder 6

$R^1$ bis $R^4$ gleich oder verschieden, gegebenenfalls durch eine Einfach- oder Doppelbindung direkt miteinander verbundener Alkoxy- oder Carboxyreste ($C_1$-$C_8$) können enthalten sein. Hergestellt werden diese Boratsalze durch Umsetzung

von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Die erfindungsgemäßen Verbindungen können auch in Elektrolyte eingesetzt werden, die Lithiumfluoralkylphosphate der allgemeinen Formel enthalten,

$$Li^+[PF_x(C_yF_{2y+1-z}H_z)_{6-x}]^-$$

worin

$$1 \leq x \leq 5$$

$$3 \leq y \leq 8$$

$$0 \leq z \leq 2y + 1$$

bedeuten und die Liganden ($C_yF_{2y+1-z}H_z$) gleich oder verschieden sein können, wobei die Verbindungen der allgemeinen Formel,

$$Li^+[PF_a(CH_bF_c(CF_3)_d)_e]^-$$

in der a eine ganze Zahl von 2 bis 5, b = 0 oder 1, c = 0 oder 1, d = 2 und
e eine ganze Zahl von 1 bis 4 bedeuten, mit den Bedingungen, daß b und c nicht gleichzeitig jeweils = 0 bedeuten und die Summe aus a + e gleich 6 ist und die Liganden ($CH_bF_c(CF_3)_d$) gleich oder verschieden sein können, ausgenommen sind (DE 100 089 55). Das Verfahren zur Herstellung von Lithiumfluoralkylphosphaten der oben angegebenen Formel ist dadurch gekennzeichnet, daß wenigstens eine Verbindung der allgemeinen Formel

$$H_mP(C_nH_{2n+1})_{3-m},$$

$$OP(C_nH_{2n+1})_3,$$

$$Cl_mP(C_nH_{2n+1})_{3-m},$$

$$F_mP(C_nH_{2n+1})_{3-m},$$

$$Cl_oP(C_nH_{2n+1})_{5-o},$$

$$F_oP(C_nH_{2n+1})_{5-o},$$

in denen jeweils
$0 \leq m \leq 2,3 \leq n \leq 8$ und $0 \leq o \leq 4$ bedeutet,
durch Elektrolyse in Fluorwasserstoff fluoriert wird, das so erhaltene Gemisch der Fluorierungsprodukte durch Extraktion, Phasentrennung und/oder Destillation aufgetrennt wird, und das so erhaltene fluorierte Alkylphosphoran in einem aprotischen Lösungsmittel oder Lösungsmittelgemisch unter Feuchtigkeitsausschluß mit Lithiumfluorid umgesetzt wird, und das so erhaltene Salz nach den üblichen Methoden gereinigt und isoliert wird.

Die erfindungsgemäßen Verbindungen können in Elektrolyte für elektrochemische Zellen eingesetzt werden, die Anodenmaterial, bestehend aus beschichteten Metallkernen, ausgewählt aus der Gruppe Sb, Bi, Cd, In, Pb, Ga und Zinn oder deren Legierungen, enthalten (DE 100 16 024). Das Verfahren zur Herstellung dieses Anodenmaterials ist dadurch gekennzeichnet, daß

a) eine Suspension oder ein Sol des Metall- oder Legierungskerns in Urotropin hergestellt wird,

b) die Suspension mit Kohlenwasserstoffen mit $C_5$-$C_{12}$ emulgiert werden,

c) die Emulsion auf die Metall- oder Legierungskerne aufgefällt werden und

d) durch Temperung des Systems die Metallhydroxide bzw. -oxihydroxide in das entsprechende Oxid übergeführt werden.

Die erfindungsgemäßen Verbindungen können auch in Elektrolyte für elektrochemische Zellen eingesetzt werden, mit Kathoden aus gängigen Lithium-Interkalations und Insertionsverbindungen aber auch mit Kathodenmaterialien, die aus Lithium-Mischoxid-Partikel bestehen, die mit einem oder mehreren Metalloxiden (DE 199 22 522) beschichtet sind, indem die Partikel in einem organischen Lösungsmittel suspendiert werden, die Suspension mit einer Lösung einer hydrolisierbaren Metallverbindung und einer Hydrolyselösung versetzt und danach die beschichteten Partikel abfiltriert, getrocknet und gegebenenfalls calciniert werden. Sie können auch aus Lithium-Mischoxid-Partikel bestehen, die mit einem oder mehreren Polymeren (DE 199 46 066) beschichtet sind, erhalten durch ein Verfahren, bei dem die Partikel in einem Lösungsmittel suspendiert werden und anschließend die beschichteten Partikel abfiltriert, getrocknet und gegebenenfalls calciniert werden. Ebenso können die erfindungsgemäßen Verbindungen in Systemen mit Kathoden eingesetzt werden, die aus Lithium-Mischoxid-Partikeln bestehen, die mit Alkalimetallverbindungen und Metalloxiden ein- oder mehrfach beschichtet sind (DE 100 14 884). Das Verfahren zur Herstellung dieser Materialien ist dadurch gekennzeichnet, daß die Partikel in einem organischen Lösungsmittel suspendiert werden, eine Alkalimetallsalzverbindung suspendiert in einem organischen Lösungsmittel zugegeben wird, Metalloxide gelöst in einem organischen Lösungsmittel zugegeben werden, die Suspension mit einer Hydrolyselösung versetzt wird und anschließend die beschichteten Partikel abfiltriert, getrocknet und calciniert werden.

Nachfolgend wird ein allgemeines Beispiel der Erfindung näher erläutert.

Zur Darstellung des Anions ausgewählt aus der Gruppe

$$[B(OR^1)_n(OR^2)_m(OR^3)_o(OR^4)_p]^-$$

mit 0≤n, m, o, p≤4 und

$$m+n+o+p=4$$

wobei $R^1$ bis $R^4$ verschieden oder paarweise gleich sind, durch eine Einfach- oder Doppelbildung direkt miteinander verbunden sind, jeweils einzeln oder gemeinsam

die Bedeutung eines aromatischen Rings aus der Gruppe Anthracenyl oder Phenanthrenyl, der unsubstituiert oder ein- oder mehrfach durch $C_nF_{(2n+1-x)}H_x$ mit 1<n<6 und 0<x≤13 oder F, Cl, Br substituiert sein kann, besitzen,

die Bedeutung eines aromatischen heterocyclischen Rings aus der Gruppe Pyridyl, Pyrazyl oder Pyrimidyl, der unsubstituiert oder ein- oder mehrfach durch $C_nF_{(2n+1-x)}H_x$ mit 1<n<6 und 0<x≤13 oder F, Cl, Br substituiert sein kann, besitzen,

die Bedeutung eines aromatischen oder aliphatischen Carboxyl-, Dicarboxyl- oder Hydroxycarboxylrests, der teilweise oder vollständig durch F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann, wird ein bekanntes Verfahren aus WO 98/07729 verwendet.

Zur Darstellung des Kations ausgewählt aus der Gruppe

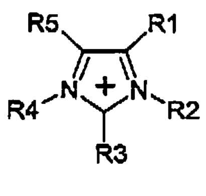

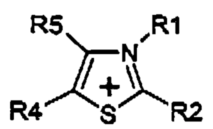

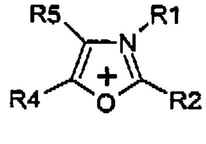

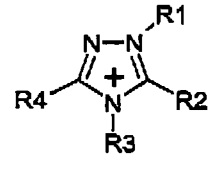

wird ein bekanntes Verfahren aus US 5827602 verwendet. Die Edukte werden in einem aprotischen organischen Lösungsmittel, bei Temperaturen im Flüssigkeitsbereich des Lösungsmittels, ca. 0,5 bis 12 Stunden, bevorzugt 1-4 Stunden, umgesetzt.

Zur Entfernung der Nebenprodukte wird auf bis zu -30°C, z.B. bei LiCl als Nebenprodukt auf -10°C bis -20°C, gekühlt und das ausfallende Nebenprodukt abfiltriert, bevorzugt vakuumfiltriert.

Das Lösungsmittel/Produkt-Gemisch kann direkt im Elektrolyten eingesetzt werden. Gegebenenfalls kann auch das Lösungsmittel abdestilliert und das erhaltene Produkt getrocknet werden.

Die nachfolgenden Beispiele sollen die Erfindung näher erläutern, ohne sie jedoch zu beschränken.

<u>Beispiele</u>

<u>Beispiel 3</u>

Synthese von 1-Ethyl-3-methylimidazoliumbis[oxalato]borat

Lithiumbis[oxalato]borat wird nach WO 94/27335 bzw. nach WO 98/07729 synthetisiert und mit 1-Ethyl-2-methylimidazoliumchlorid in Acetonitril umgesetzt. Die Reaktionsmischung wird unter Kühlung über eine Glasfritte vakuumfiltriert, um das als Nebenprodukt gebildete LiCl zu entfernen. Das Lösungsmittel wird unter Vakuum abdestilliert und das erhaltene 1-Ethyl-3-methylimidazoliumbis[oxalato]borat im Vakuum getrocknet.

<u>Beispiel 4</u>

Synthese von Ethylmethylimidazolium-bis[1,2-oxalato(2-)-O,O']borat (EMIBOX)

a) Ethylmethylimidazoliumchlorid (EMIC)

Das Ethylmethylimidazoliumchlorid wurde gemäß Smith G.P. et al, Brönstedt Superacidity of HCl in a Liquid Chloroaluminate, J. Am. Chem. Soc., 111, 1989, 525-530, aus Methylimidazol und Chlorethan in Acetonitril hergestellt.

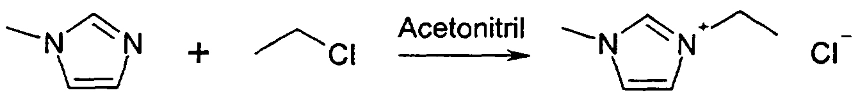


82.11 64.52 146.63

b) Synthese von 1-Ethyl-3-methylimidazoliumhydroxid

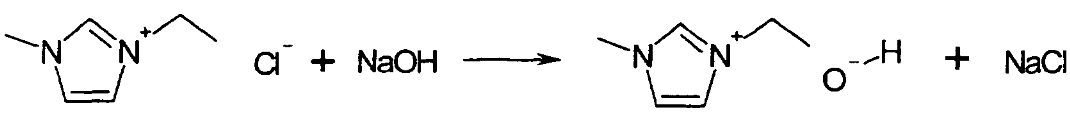

146.63 128.18

26.4 g (180mmol) 1-Ethyl-3-methylimidazoliumchlorid werden in 0.5 l Millipore-Wasser gelöst und auf eine Säule mit frisch regeneriertem, stark basischem Ionenaustauscher (Ionenaustauscher III zur Analyse, Merck) aufgebracht und mit ca. 0.9 L Millipore-Wasser gespült. Das Eluat wird am Rotationsverdampfer auf etwa 250 ml eingeengt und mittels potentiometrischer Titration mit 1 N HCl der Hydroxid-Gehalt bestimmt.

Ausbeute

244 ml 0.714 M Lösung (174 mmol, 97%).

Reinheit

Ein qualitativer Test auf Chlorid mit Silbernitrat im Sauren ist negativ.

c) Synthese von 1-Ethyl-3-methylimidazoliumbis[1,2-oxalato(2-)-O,O']borat (EMIBOX)

Durch azeotropes Abdestillieren von Wasser mittels DEC wurde EMIBOX aus wässrigem 1-Ethyl-3-methylimidazoliumhydroxid, Borsäure und Oxalsäuredihydrat synthetisiert.

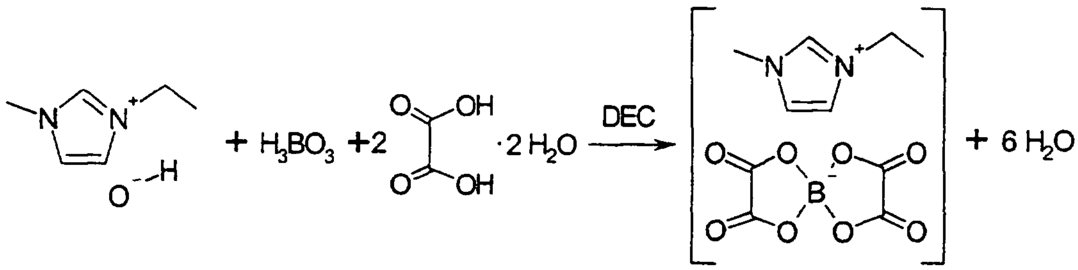


128.18 61.83 126.03 298.02

232 ml (166 mmol) der hergestellten 0.714 M 1-Ethyl-3-methylimidazoliumhydroxidlösung werden mit 10.2 g Borsäure und 41.8 g Oxalsäuredihydrat versetzt. Die Lösung verfärbt sich gelb. Nach vollständiger Lösung der Edukte wird am Rotationsverdampfer auf etwa 100 ml eingeengt und mit DEC das Wasser azeotrop abdestilliert, wobei die bei Zugabe des DEC aufgetretene Braunfärbung verschwindet. Es entsteht ein flüssiges, farbloses Produkt, das über Nacht bei -30°C fest wird. Es wird abdekantiert und am Ölpumpenvakuum getrocknet. Das Rohprodukt wurde durch mehrfaches Umkristallisieren gereinigt.

Ausbeute

39.9 g (134 mmol, 81%) farblose Kristallnadeln, Schmelzpunkt 56°C.

Analytik

| | C | H | N |
|---|---|---|---|
| Berechnet | 40.30 % | 3.72 % | 9.40 % |
| Gefunden | 40.41 % | 3.77 % | 9.40% |

Massenspektroskopie

ESI (Anionen)

| m/z | Intensität / % | Zuordnung |
|---|---|---|
| 115 | 80 | $[(C_2O_4)B\text{-}O]^-$ |
| 187 | 100 | $A^-$ |

ESI (Kationen)

| m/z | Intensität/% | Zuordnung |
|---|---|---|
| 111 | 100 | $K^+$ |

$^1$H-NMR-Spektrum von 1-Ethyl-3-methylimidazoliumbis[1,2-oxalato (2-)-O,O']borat [Abbildung 1]
H-NMR, ppm: (400.14 MHz, 120 mg in 0.8 ml $CD_3CN$, Ref. Lösungsmittel = 1.93 ppm)
1.45 t Ethyl-$CH_3$;
1.92 - 1.95 m $CD_3CN$;
3.84 s Methyl-$CH_3$;
4.18 q -CH2-;
7.38 t bzw. 7.44 t C4/5-H;
8.89 s C2-H.
$^{13}$C-NMR-Spektrum von 1-Ethyl-3-methylimidazoliumbis[1,2-oxalato(2-)-O,O']borat [Abbildung 2]
$^{13}$C-NMR, ppm: (100.61 MHz, 120mg in 0.8 ml $CD_3CN$, Ref. Lösungsmittel = 1.3 ppm)
0.89 - 1.71 m $CD_3CN$;
15.49 s Ethyl-C2, dept+;
36.70 s Methyl-C, dept+;
45.68 s Ethyl-C1, dept-;
118.37 s $CD_3CN$;
122.84 s C4/C5; dept+;
124.49 s C4/C5; dept+;

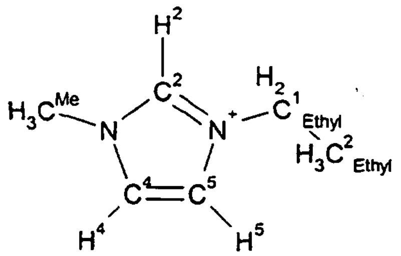

137.02 s C2, dept+;
159.68 s Anion-C
$^{11}$B-NMR-Spektrum von 1-Ethyl-3-methylimidazoliumbis[1,2-oxalato(2-)-O,O']borat [Abbildung 3]
$^{11}$B-NMR, ppm: (128.38 MHz, 120 mg in 0.8 mL $CD_3CN$, Ref. Et-O-Et·$BF_3$ extern)
8.09 s vierfach koordiniertes Bor

<u>Beispiel 5</u>

Synthese von Ethylmethylimidazolium-bis[1,2-lactato(2-)-O,O']borat (EMIBLAC)

EMIBLAC wurde, analog dem EMIBOX, durch azeotropes Abdestillieren von Wasser dargestellt.

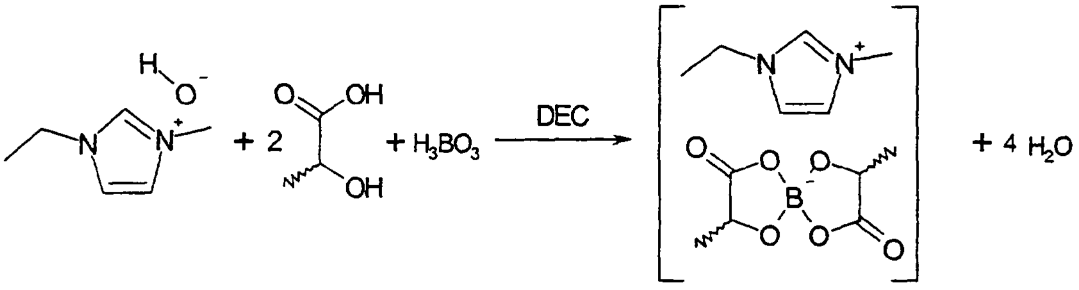


128.18 90.08 61.83 298.11 18.02

65 ml einer 0.515 molaren EMIOH-Lösung werden mit 6.03 g (0.067 mol) Milchsäure versetzt und zum Sieden erhitzt. Nach einiger Zeit gibt man 2.07 g (0.0335 mol) Borsäure portionsweise zu. Anschließend versetzt man die Reaktionsmischung mit DEC und destilliert das Wasser azeotrop ab. Man erhält ein gelbliches Öl, das bei -30 °C erstarrt. Man dekantiert die überstehende Lösung ab und reinigt das Öl durch Waschen und Umkristallisieren mit organischen Lösungsmitteln.

a) Leitfähigkeitsmessungen von EMIBOX in organischen Lösungsmitteln.

Lösungen des neuen Salzes EMIBOX wurden im Handschuhkasten unter Inertgasatmosphäre hergestellt. Dazu wurden die reinen Lösungsmittel Ethylacetat (EA), Acetonitril (AN) sowie die folgenden Lösungsmittelgemische benutzt: Propylencarbonat (PC)/Dioxolan (DIOX) im Verhältnis der Molzahlen 1:6 ($n_{PC}/n_{DIOX}$), Gamma-Butyrolacton (GBL) /EA 1:4 ($n_{GBL}$ / $n_{EA}$) und eine in Tabelle 1 angegebene Mischung verschiedener spannungsstabiler Lösungsmittel. Die Zusammensetzungen der Lösungen inklusive der Konzentrationen im Maß Molalität (mol/kg) wurden durch Wägungen bestimmt. Die Leitfähigkeiten wurden in eigens dafür hergestellten Mikrozellen mit Platinelektroden im Frequenzbereich 30 Hz bis 10 kHz bei 25°C in einem Präzisionsthermostaten gemessen.

Tabelle 1: Zusammensetzung der Lösungsmittelmischung

| **LM** | **Masse [g]** | **N [mol]** | **X** |
|---|---|---|---|
| EC | 8.24 | 0.09 | 0.09 |
| GBL | 15.42 | 0.18 | 0.18 |
| EMC | 26.86 | 0.26 | 0.26 |
| DMC | 19.16 | 0.22 | 0.22 |
| DEC | 30.44 | 0.26 | 0.26 |

In Tabelle 1 sind EMC Ethylmethycarbonat, DMC Dimethylcarbonat und DEC Diethylcarbonat, n sind Molzahlen, X der Molenbruch der Lösungsmittel.

Es wurden die in den Tabellen 2-4 und Auftragungen 4-6 gezeigten, auf die Frequenz unendlich extrapolierten Leitfähigkeitswerte $\kappa$ in Abhängigkeit von der molalen Konzentration ***m*** erhalten. Obwohl es sich bei den angegebenen Werten um typische, aber noch nicht optimierte Werte für dieses Salz handelt, konnten auch ohne AN schon Leitfähigkeiten von mehr als 17 mS/cm bei 25°erhalten werden.

Tabelle 2: Leitfähigkeiten von EMIBOX in EA bei 25°C

| ***m*** **/(mol/kg)** | $\kappa$ **/(mS/cm)** |
|---|---|
| 0.78 | 8.3 |
| 1.20 | 11.3 |
| 1.50 | 12.5 |
| 1.78 | 13.1 |

(fortgesetzt)

| *m* /(mol/kg) | κ /(mS/cm) |
|---|---|
| 2.09 | 13.5 |
| 2.42 | 13.5 |

Tabelle 3: Leitfähigkeiten von EMIBOX in PC/DIOX 1:6 (n/n) bei 25°C.

| *m* /(mol/kg) | κ / (mS/cm) |
|---|---|
| 0.60 | 12.3 |
| 0.89 | 15.1 |
| 1.20 | 16.6 |
| 1.50 | 17.3 |
| 1.81 | 17.1 |
| 2.10 | 16.8 |

Tabelle 4: Leitfähigkeiten von EMIBOX in GBL/EA 1:4 (n/n) bei 25°C

| *m* /(mol/kg) | κ / (mS/cm) |
|---|---|
| 0.62 | 10.1 |
| 0.88 | 12.6 |
| 1.20 | 14.4 |
| 1.50 | 15.3 |
| 1.80 | 15.2 |
| 2.06 | 15.2 |

Die angegebenen Werte können mit der Casteel-Amis-Gleichung

$$\kappa = \kappa_{max}\left(\frac{m}{\mu}\right)^{A} \exp\left[B(m-\mu)^2 - A\left(\frac{m}{\mu}-1\right)\right]$$

zu Interpolationszwecken gefittet werden. Man erhält die in Tabelle 5 angegebenen Parameter, $\mu$ **/ (mol/kg)** die molale Konzentration, bei der das Maximum der Leitfähigkeit für die jeweilige Mischung liegt, $\kappa_{max}$ **/ (mS/cm)**, die maximale Leitfähigkeit sowie zwei weitere Parameter A und B, die ohne physikalische Bedeutung sind. Die nach den ± Zeichen angegebenen Werte sind die Standardabweichungen der genannten Parameter.

Tabelle 5: Parameter der Casteel-Amis-Fits von EMIBOX in einem Lösungsmittel und zwei Lösungsmittelgemischen bei 25°C

| | EA | PC/DIOX 1:6 (n/n) | GBUEA 1:4 (n/n) |
|---|---|---|---|
| $\mu$ **/ (mol/kg)** | 2.301 ±0.017 | 1.624 ±0.011 | 1.7579 ±0.082 |
| $\kappa_{max}$ **/ (mS/cm)** | 13.50 ±0.063 | 17.26 ±0.03 | 15.36 ±0.13 |
| ***A*** | 1.596 ±0.027 | 1.023 ±0.072 | 1.173 ±0.41 |
| ***B*** | 0.07807 ±0.006 | 0.03331 ±0.023 | 0.03672 ±0.13 |

EMIBOX zeigte in reinem Acetonitril (AN) und in der in Tabelle 1 angegebenen Mischung die in Tabelle 6 zusammengefassten Leitfähigkeiten bei 25°C.

Tabelle 6: Leitfähigkeiten von EMIBOX in AN und Lösungsmittelmischung gemäß Tabelle 1 bei 25°C

| **m /(mol/kg)** | **$\kappa$ / (mS/cm)** | ***Lösungsmittel*** |
|---|---|---|
| 0.77 | 32.3 | AN |
| 1.09 | 37.0 | AN |
| 0.88 | 9.9 | Mischung |
| 1.10 | 10.8 | Mischung |

b) Elektrochemische Messungen von Elektrolyten mit EMIBOX in organischen Lösungsmitteln.

Impedanzmessungen an einem Doppelschichtkondensator

Abbildung 7 zeigt Impedanzmessungen an einem Doppelschichtkondensator der mit einem Lösungsmittelgemisch gemäß Tabelle 1 gefüllt war, in dem 1.1 mol/kg EMIBOX enthalten war. Z ist der Realteil der Impedanz, Z' der Imaginärteil. Die Messungen wurden mit dem Gerät IM6 der Firma Zahner im Frequenzbereich 10m Hz bis 100 kHz an einem auf 2.3V aufgeladenen Kondensator mit einer Amplitude von 5 mV durchgeführt.

Aus dem Impedanzspektrum erhält man die in Tabelle 7 wiedergegebenen Werte für den ESR bei 100 Hz und 0.01 Hz sowie die Kapazität C bei 0.01 Hz.

Tabelle 7: ESR und Kapazität des mit dem Lösungsmittelgemisch und EMIBOX 1.1 $mol/kg_{LM}$ gefüllten Kondensators

| ESR und Kapazität des mit dem Lösungsmittelgemisch und EMIBOX 1.1 $mol/kg_{LM}$ gefüllten Kondensators | |
|---|---|
| R(100 Hz) | 0.0371 Ω |
| R(0.01 Hz) | 0.1657 Ω |
| C(0.01 Hz) | 130.8 $AsV^{-1}$ |

Abbildung 8 zeigt Impedanzmessungen an einem Kondensator gleichen Typs, der mit einer Lösung von 1.6 $mol/kg_{LM}$ EMIBOX in Acetonitril gefüllt war, aus denen die in Tabelle 8 zusammengefassten Werte erhalten wurden.

Tabelle 8: ESR und Kapazität des mit 1.6 $mol/kg_{LM}$ EMIBOX in Acetonitril gefüllten Kondensators

| ESR und Kapazität des mit 1.6 $mol/kg_{LM}$ EMIBOX in Acetonitril gefüllten Kondensators | |
|---|---|
| R(100 Hz) | 0.0088 Ω |
| R(0.01 Hz) | 0.0254 Ω |
| C(0.01 Hz) | 146.4 $AsV^{-1}$ |

Spannungsfestigkeit und Selbstentladung

Abbildung 9 zeigt einen typischen Spannungsabfall eines auf 2.3 V geladenen Kondensators in Abhängigkeit von der Zeit t in Stunden.

Tabelle 9 zeigt die nach dem Aufladen der Kondensatoren auf 2.3V bzw. 2.5 V erhaltenen Spannungsabfälle für verschiedene Elektrolyte nach 16 Stunden.

| **Kondensator** | **Ladespannung /V** | **Spannungsabfall /mV** |
|---|---|---|
| EMIBOX in AN; 1.6 $mol/kg_{LM}$ | 2.3 | 329 |
| EMIBOX in GBL/EA 1:4; 1.5 $mol/kg_{LM}$ | 2.3 | 268 |

(fortgesetzt)

| Kondensator | Ladespannung /V | Spannungsabfall /mV |
|---|---|---|
| EMIBOX in LM-Mischung; 1.1 mol/$kg_{LM}$ | 2.3 | 243 |
| EMIBOX in LM-Mischung; 1.1 mol/$kg_{LM}$ | 2.5 | 252 |
| EMIBOX in LM-Mischung; 1.1 mol/$kg_{LM}$ | 2.7 | 562 |

Löslichkeit der neuen Salze in organischen Lösungsmitteln.

Beispielhaft seien, um die außerordentlich gute Löslichkeit derartiger Salze in organischen Lösungsmitteln, selbst niedriger Dieelektrizitätszahl zu belegen, die folgenden Mindestlöslichkeiten bei 25°C angegeben:

In der Mischung PC/DIOX 1:6 beträgt die Löslichkeit >4.2 mol EMIIBOX pro kg Lösungsmittel, was einem Salzanteil von 55 Gew% entspricht, in DIOX >4.3 mol EMIIBOX pro kg Lösungsmittel.

## Patentansprüche

**1.** Ionische Flüssigkeiten der allgemeinen Formel

$K^+A7$ (I)

worin bedeuten:

$K^+$ ein Kation ausgewählt aus der Gruppe

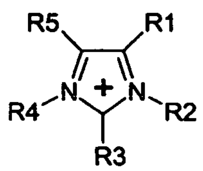

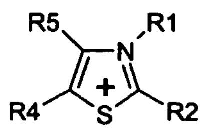

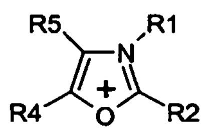

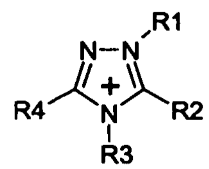

wobei $R^1$ bis $R^5$ gleich oder verschieden, gegebenenfalls durch eine Einfach- oder Doppelbindung direkt miteinander verbunden sind und jeweils einzeln oder gemeinsam folgende Bedeutung haben:

- H,
- Halogen,
- Alkylrest mit $C_1$ bis $C_8$ der teilweise oder vollständig durch F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann

und

$A^-$ ein Anion ausgewählt aus der Gruppe

$$[B(OR^1)_n(OR^2)_m(OR^3)_o(OR^4)_p]^-$$

mit $0 \le n, m, o, p \le 4$ und

$$m+n+o+p=4$$

wobei $R^1$ bis $R^4$ verschieden oder paarweise gleich sind, durch eine Einfach- oder Doppelbildung direkt miteinander verbunden sind, jeweils einzeln oder gemeinsam
die Bedeutung eines aromatischen Rings aus der Gruppe Anthracenyl oder Phenanthrenyl, der unsubstituiert oder ein- oder mehrfach durch $C_nF_{(2n+1-x)}H_x$ mit $1<n<6$ und $0<x\le13$ oder F, Cl, Br substituiert sein kann, besitzen,
die Bedeutung eines aromatischen heterocyclischen Rings aus der Gruppe Pyridyl, Pyrazyl oder Pyrimidyl, der unsubstituiert oder ein- oder mehrfach durch $C_nF_{(2n+1-x)}H_x$ mit $1 <n<6$ und $0<x\le13$ oder F, Cl, Br substituiert sein kann, besitzen,
beziehungsweise $OR^1$ bis $OR^4$
einzeln oder gemeinsam die Bedeutung eines aliphatischen Carboxyl-, Dicarboxyl-, Oxysulfonyl- oder Oxycarboxylrests, der teilweise oder vollständig durch F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit $1 <n<6$ und $0<x\le13$ substituiert sein kann, besitzen.

**2.** Verwendung ionischer Flüssigkeiten wie in Anspruch 1 definiert in elektrochemischen Zellen mit verbesserter thermischer Stabilität, geringerer Korrosivität und einem größeren Flüssigkeitsbereich.

**3.** Verwendung ionischer Flüssigkeiten wie in Anspruch 1 definiert in Superkondensatoren.

**4.** Verwendung ionischer Flüssigkeiten wie in Anspruch 1 definiert in Mischungen mit aprotischen Lösungsmitteln.

**5.** Verwendung ionischer Flüssigkeiten wie in Anspruch 1 definiert in Mischungen mit anderen Leitsalzen.

**6.** Verwendung ionischer Flüssigkeiten wie in Anspruch 1 definiert als Lösungsmittel und in der Katalyse von chemischen Reaktionen.

**7.** Verwendung ionischer Flüssigkeiten wie in Anspruch 1 definiert als hydraulische Flüssigkeit.

## Claims

**1.** Ionic liquids of the general formula

$$K^+A^- \quad (I)$$

in which:

$K^+$ denotes a cation selected from the group

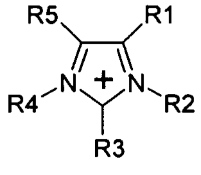

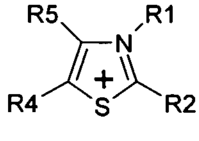

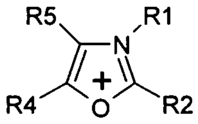

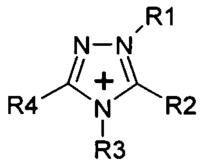

where $R^1$ to $R^5$, identically or differently, are optionally bonded directly to one another by a single or double bond and each, individually or together, have the following meaning:

- H,
- halogen,
- alkyl radical having $C_1$ to $C_8$, which may be partially or fully substituted by F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$, where $1<n<6$ and $0<x\leq13$

and

A- denotes an anion selected from the group

$$[B(OR^1)_n(OR^2)_m(OR^3)_o(OR^4)_p]^-$$

where $0\leq n, m, o, p\leq4$, and

$$m+n+o+p=4,$$

where $R^1$ to $R^4$ are different or are identical in pairs, are bonded directly to one another by a single or double bond, each, individually or together,
have the meaning of an aromatic ring from the group anthracenyl or phenanthrenyl, which may be unsubstituted or mono- or polysubstituted by $C_nF_{(2n+1-x)}H_x$, where $1<n<6$ and $0<x\leq13$, or F, Cl, Br,
have the meaning of an aromatic heterocyclic ring from the group pyridyl, pyrazyl or pyrimidyl, which may be unsubstituted or mono- or polysubstituted by $C_nF_{(2n+1-x)}H_x$, where $1<n<6$ and $0<x\leq13$, or F, Cl, Br,
or $OR^1$ to $OR^4$,
individually or together, have the meaning of an aliphatic carboxyl, dicarboxyl, oxysulfonyl or oxycarboxyl radical, which may be partially or fully substituted by F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$, where $1<n<6$ and $0<x\leq13$.

**2.** Use of ionic liquids as defined in Claim 1 in electrochemical cells having improved thermal stability, reduced corrosivity and a larger liquid range.

**3.** Use of ionic liquids as defined in Claim 1 in supercapacitors.

**4.** Use of ionic liquids as defined in Claim 1 in mixtures with aprotic solvents.

**5.** Use of ionic liquids as defined in Claim 1 in mixtures with other conductive salts.

**6.** Use of ionic liquids as defined in Claim 1 as solvents and in the catalysis of chemical reactions.

**7.** Use of ionic liquids as defined in Claim 1 as hydraulic fluid.

## Revendications

**1.** Liquides ioniques de formule générale

$K^+A^-$ (I)

dans laquelle :

$K^+$ désigne un cation choisi parmi le groupe

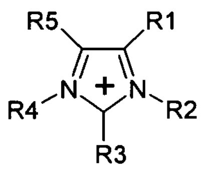

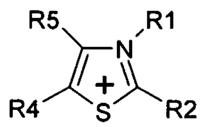

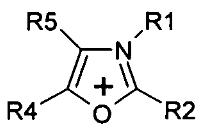

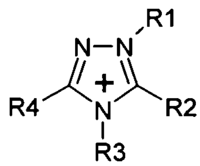

où $R^1$ à $R^5$, de manière identique ou différente, sont éventuellement liés directement les uns aux autres par une liaison simple ou double et chacun, individuellement ou ensemble, ont la signification suivante :

- H,
- halogène,
- radical alkyle en $C_1$ à $C_8$, pouvant être partiellement ou totalement substitué par F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$, où $1 < n < 6$ et $0 < x \leq 13$

et

A- désigne un anion choisi parmi le groupe

$$[B(OR^1)_n(OR^2)_m(OR^3)_o(OR^4)_p]^-$$

où $0 \leq n, m, o, p \leq 4$, et

$$m+n+o+p=4,$$

où $R^1$ à $R^4$ sont différents ou sont identiques par paires, sont liés directement les uns aux autres par une liaison simple ou double, chacun, individuellement ou ensemble,
ont la signification d'un cycle aromatique issu du groupe anthracényle ou phénanthrényle, pouvant être non substitué ou mono- ou polysubstitué par $C_nF(_{2n+1-x})H_x$, où $1 < n < 6$ et $0 < x \leq 13$, ou F, Cl, Br,
ont la signification d'un cycle hétérocyclique aromatique issu du groupe pyridyle, pyrazyle ou pyrimidyle, pouvant être non substitué ou mono- ou polysubstitué par $C_nF(_{2n+1-x})H_x$, où $1 < n < 6$ et $0 < x \leq 13$, ou F, Cl, Br,
ou $OR^1$ à $OR^4$,
individuellement ou ensemble, ont la signification d'un radical carboxyle, dicarboxyle, oxysulfonyle ou oxycarboxyle aliphatique, pouvant être partiellement ou totalement substitué par F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$, où $1 < n < 6$ et $0 < x \leq 13$.

**2.** Utilisation de liquides ioniques tels que définis selon la revendication 1 dans des cellules éléctrochimiques ayant une stabilité thermique améliorée, une corrosivité réduite et un domaine liquide plus important.

**3.** Utilisation de liquides ioniques tels que définis selon la revendication 1 dans des supercondensateurs.

**4.** Utilisation de liquides ioniques tels que définis selon la revendication 1 en mélanges avec des solvants aprotiques.

**5.** Utilisation de liquides ioniques tels que définis selon la revendication 1 en mélanges avec d'autres sels conducteurs.

**6.** Utilisation de liquides ioniques tels que définis selon la revendication 1 comme solvants et dans la catalyse de réactions chimiques.

**7.** Utilisation de liquides ioniques tels que définis selon la revendication 1 comme liquide hydraulique.

Abbildung 1

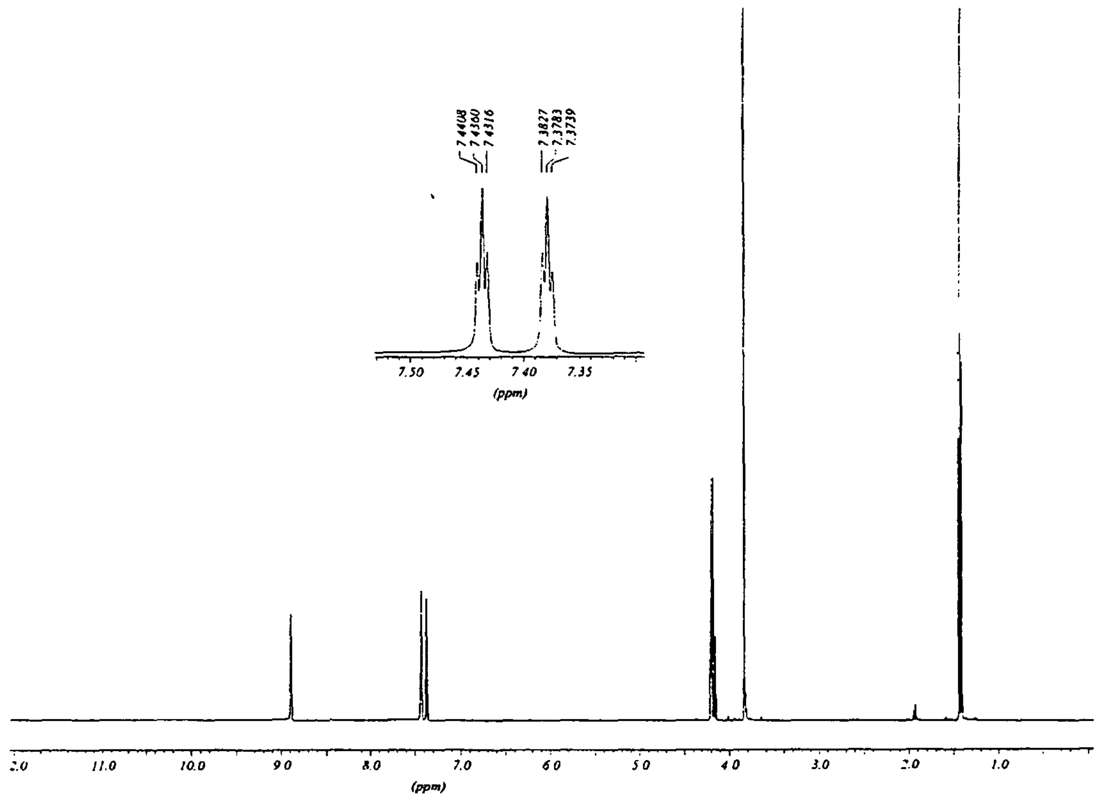

$^1$H-NMR-Spektrum von 1-Ethyl-3-methylimidazoliumbis[1,2-oxalato(2-)-O,O´]borat.

Abbildung 2

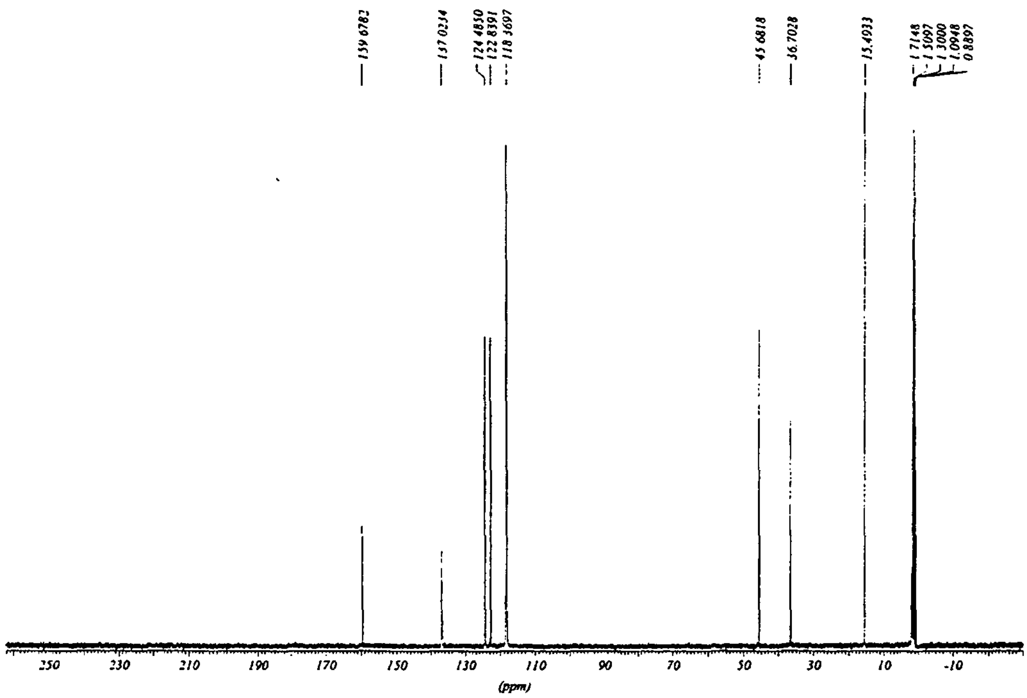


**$^{13}$C-NMR-Spektrum von 1-Ethyl-3-methylimidazoliumbis[1,2-oxalato(2-)-O,O´]borat.**

Abbildung 3

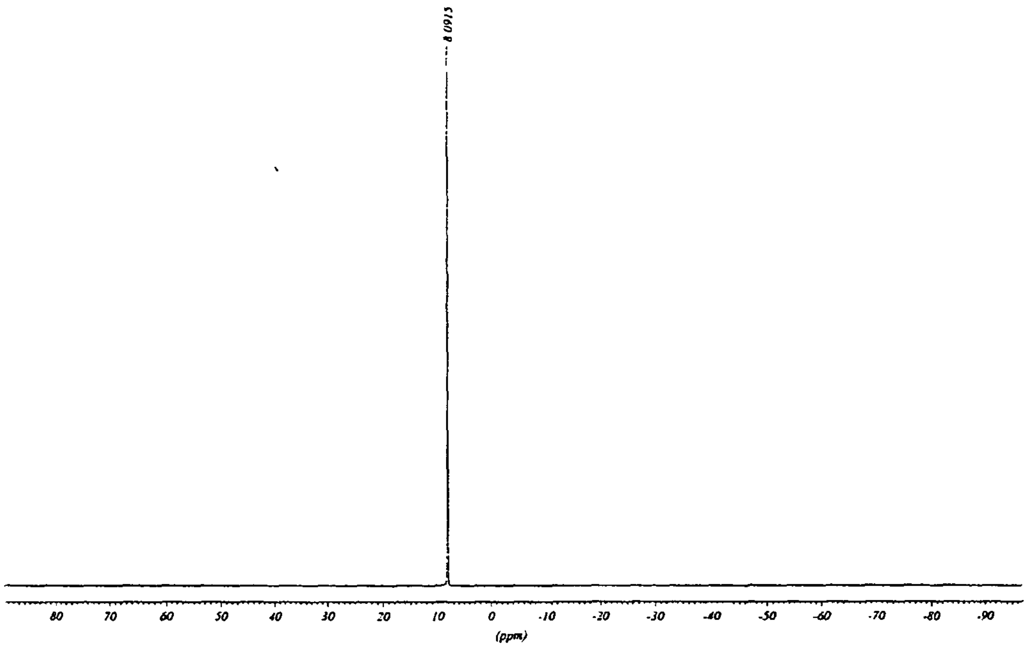

$^{11}$B-NMR-Spektrum von 1-Ethyl-3-methylimidazoliumbis[1,2-oxalato(2-)-O,O´]borat.

Abbildung 4

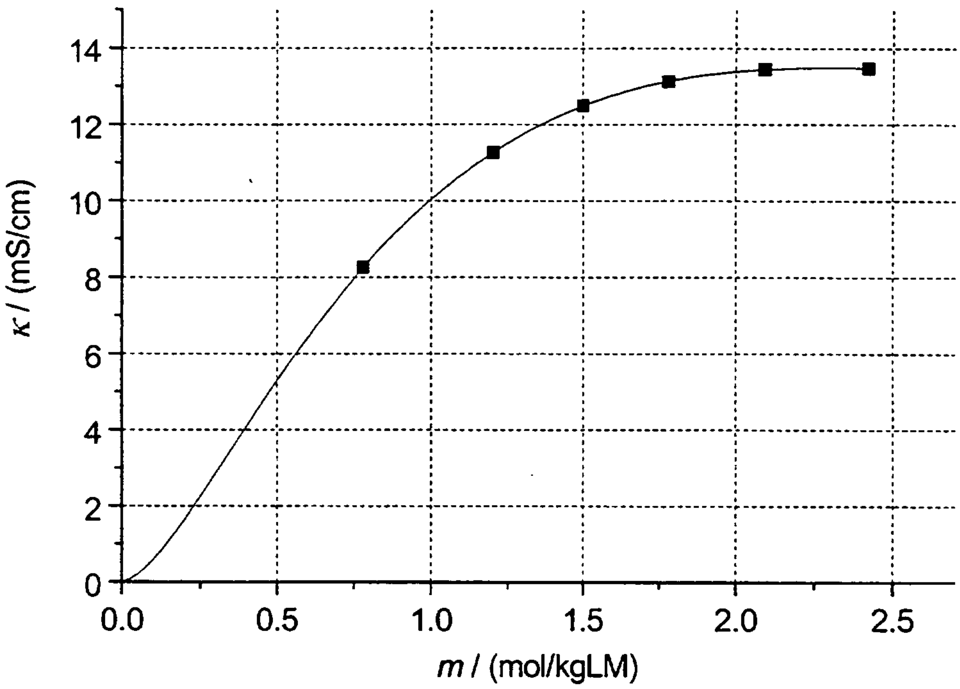


Auftragung $\kappa$=f($m$) von EMIBOX in EA bei 25°C.

Abbildung 5

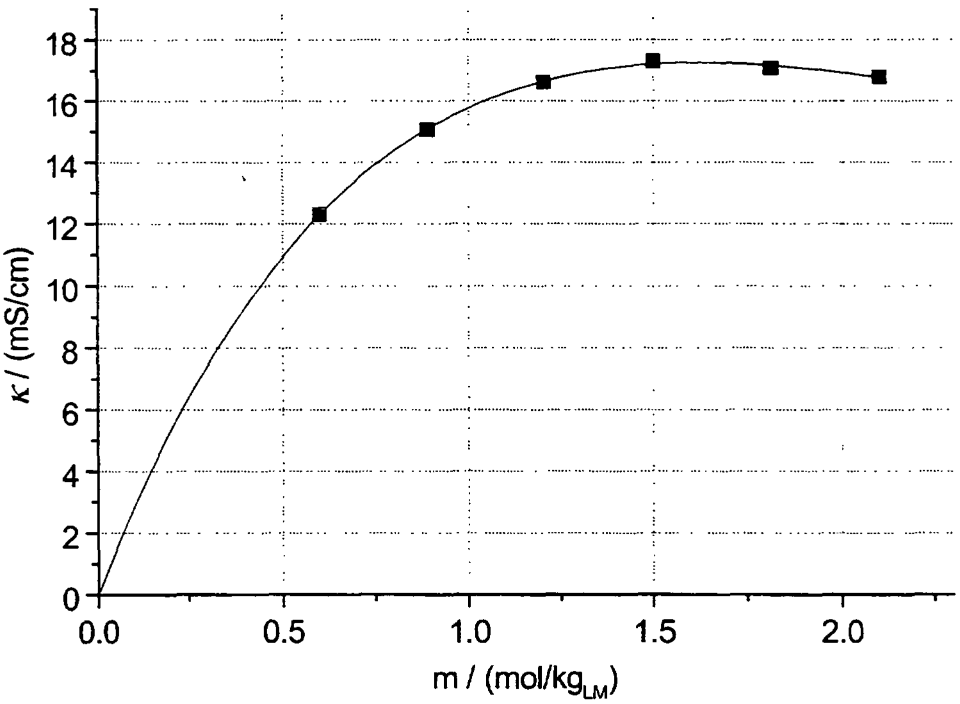


Auftragung $\kappa$=f($m$) von EMIBOX in PC/DIOX 1:6 (n/n) bei 25°C.

Abbildung 6

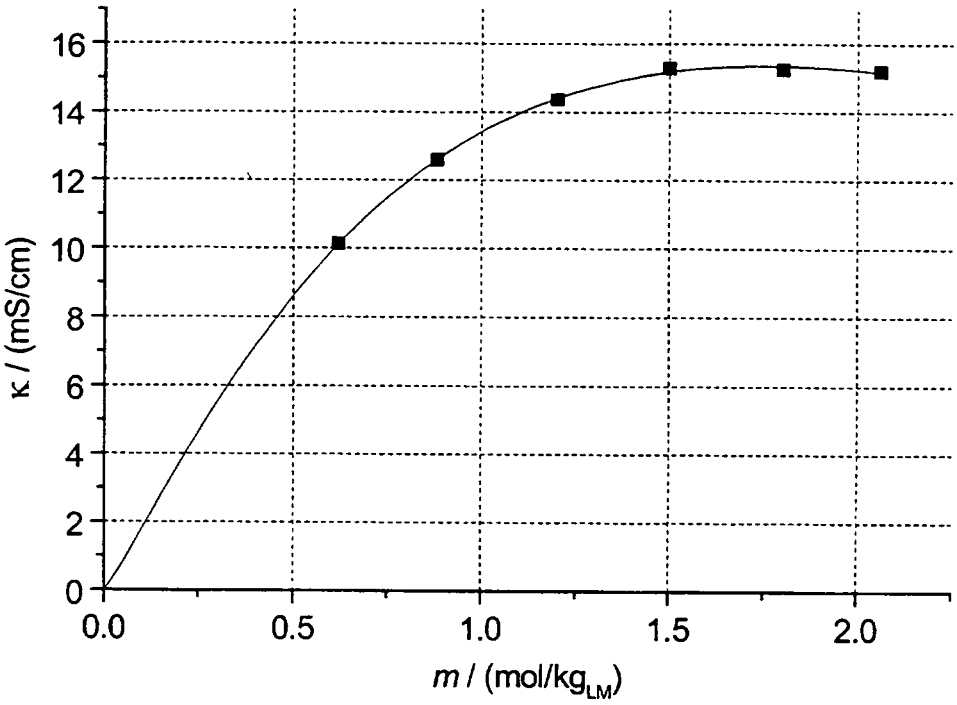


Auftragung $\kappa$=f($m$) von EMIBOX in GBL/EA 1:4 (n/n) bei 25°C.

Abbildung 7

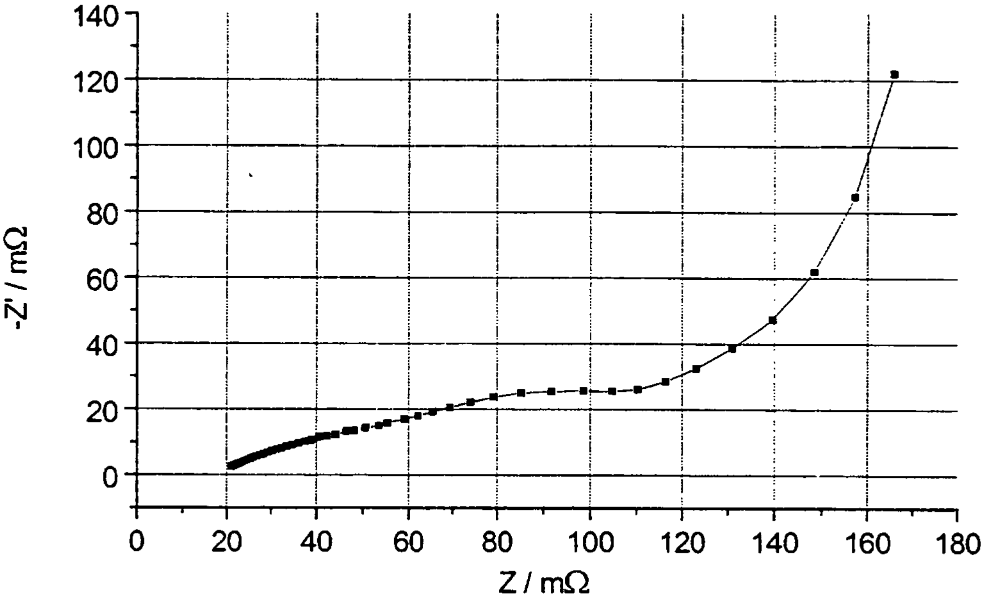


Impedanzmessungen an einem Doppelschichtkondensator von EMIBOX 1.1 mol/$kg_{LM}$ in Mischung gemäß Tabelle 1

Abbildung 8

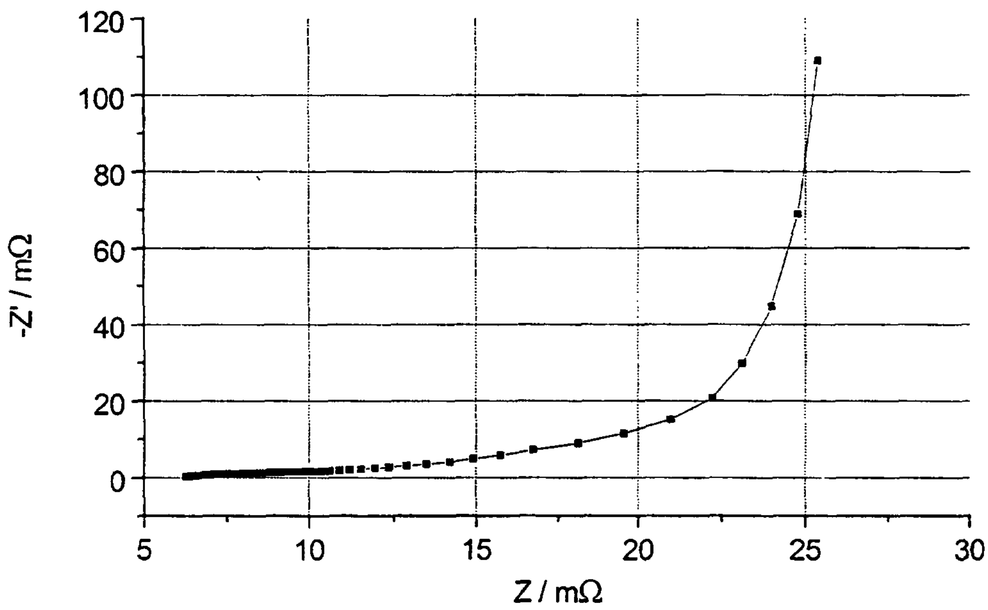


Impedanzmessungen an einem Doppelschichtkondensator von EMIBOX 1.6 Mol/kg(LM) in Acetonitril

Abbildung 9

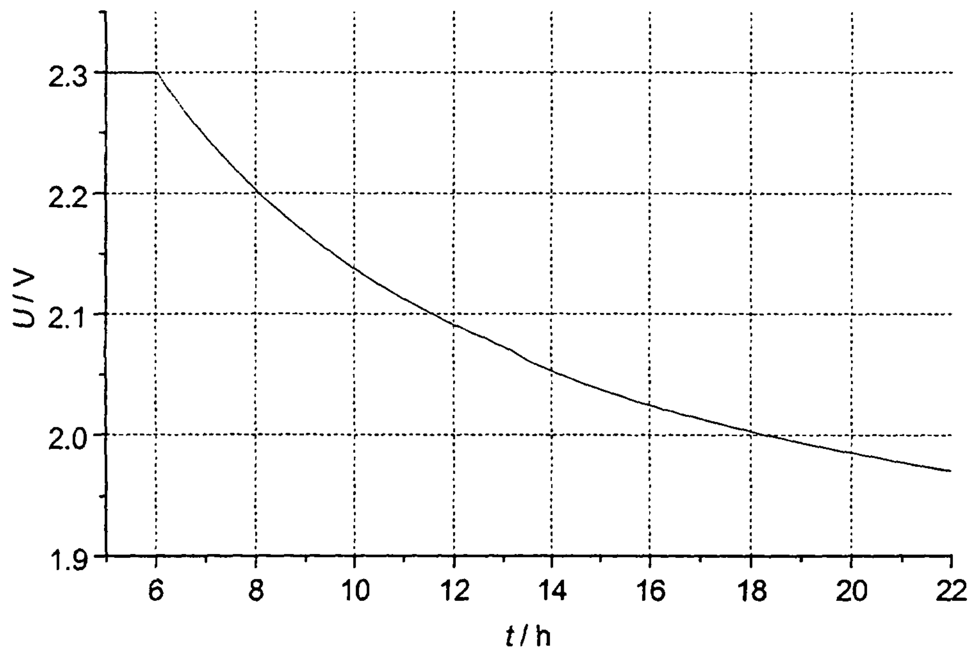


Spannungsabfall eines auf 2,3V geladenen Doppelschichtkondensators mit EMIBOX 1.6 Mol/kg(LM) in Acetonitril

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2446331 A
- WO 9807729 A
- US 5827602 A
- JP 11171981 A
- JP 11067604 A
- DE 19944603
- DE 19932317
- DE 19941566
- DE 19953638
- DE 19951804
- DE 19959722
- DE 10008955
- DE 10016024
- DE 19922522
- DE 19946066
- DE 10014884
- WO 9427335 A


### In der Beschreibung aufgeführte Nicht-Patentliteratur


- **SMITH G.P. et al.** Brönstedt Superacidity of HCl in a Liquid Chloroaluminate. *J. Am. Chem. Soc.,* 1989, vol. 111, 525-530